# EUROPEAN PATENT APPLICATION

(11) **EP 1 876 763 A2**
(43) Date of publication of application: **09.01.2008**
(21) Application number: 07111624.8
(22) Date of filing: 03.07.2007
(51) Int. Cl.: H04L 12/28

(54) **System and Method for Providing Collaboration Among a Plurality of Devices in a Mobile AD HOC Network**

(30) Priority: 05.07.2006 US 806582 P; 13.12.2006 US 610008; 25.05.2007 KR 20070050813
(71) Applicant: Samsung Electronics Co., Ltd., Suwon-si, Gyeonggi-Do (KR)
(72) Inventor: Fan, Guoxin, unknown (KR); Leung, Nim K., unknown (KR); Webb, Ronald J., unknown (KR)
(74) Representative: Grünecker, Kinkeldey, Stockmair & Schwanhäusser Anwaltssozietät

(57) **Abstract**

A system for providing collaboration among a plurality of devices in a mobile ad hoc network is disclosed. The system consists of a module within each of the devices that is operable to perform login, synchronization, data loss recovery, and conflict avoidance and resolution functions.

## Description

The present disclosure is directed to mobile ad hoc computer networks, and more particularly, but not by way of limitation, to a system and method for providing collaboration among devices in such networks.

Traditional local area networks (LANs) typically have a central server that acts as a controller and coordinator for data traffic among the clients in the network. Communication between clients in a traditional LAN typically does not occur directly from one client to another. Instead, data might be sent from a client to the server and then from the server to another client. The server might also handle the logging in of clients, the synchronization of the activities of the clients, and other centralized control functions.

As an example, if multiple players are playing a game on a traditional LAN, control of game-related functions might be coordinated by one or more servers. Players might join a game by logging in to a login server. Activities in the game might then be controlled by a central server. The central server might maintain a set of tables that keep track of current and future players, scores, histories, and other game status details. The central server might also coordinate communication between the players. That is, instead of the players communicating directly with one another or directing actions directly toward one another, messages or actions might be directed from a first player to the central server and from the central server to a second player.

It is the object of the present invention to provide a system and a method for providing collaboration among a plurality of devices in a mobile ad hoc network.

This object is solved by the subject matter of the independent claims.

Preferred embodiments are defined in the dependent claims.

The present invention will be more apparent from the following detailed description taken in conjunction with the accompanying drawings, in which:
Figure 1 is a diagram of a mobile ad hoc network according to an embodiment of the disclosure.
Figure 2 illustrates a block diagram of a mobile device operable for some of the various embodiments of the present disclosure.
Figure 3 illustrates an exemplary general-purpose computer system suitable for implementing the several embodiments of the present disclosure.

It should be understood at the outset that although an exemplary implementation of one embodiment of the present disclosure is illustrated below, the present system may be implemented using any number of techniques, whether currently known or in existence. The present disclosure should in no way be limited to the exemplary implementations, drawings, and techniques illustrated below, including the exemplary design and implementation illustrated and described herein.

The present invention provides a system and a method for providing collaboration among a plurality of devices in a mobile ad hoc network. The system consists of a module within each of the devices that is operable to perform login, synchronization, data loss recovery, and conflict avoidance and resolution functions.

The following is an explanation of the mobile ad hoc network used in the present invention, before an explanation of the present invention.

A mobile ad hoc network (MANET) can be defined as a group of wireless computing devices capable of communicating directly with one another without a server acting as a central coordinator or scheduler for the data traffic between the devices. A MANET typically comprises a plurality of wireless devices such as laptop computers, handheld computers, mobile phones or mobile handsets, personal digital assistants, and similar devices. The devices might be capable of communicating with one another via a well-known wireless data transfer protocol, such as Transmission Control Protocol/Internet Protocol (TCP/IP). According to the present invention, functions such as logging in, synchronization, recovery from data loss, and conflict avoidance and resolution are embodied without being a server in a MANET.Accordingly, although unexpected events occur, according to the present invention, the problem can be solved. For example, if multiple players were to attempt to play a multiplayer game on a MANET, there would be no login server as there would be for a multiplayer game played on a traditional network. However, according to the present invention, in a MANET, the problem that it may not be possible to verify the identity of the players attempting to play a game or to constantly obtain information of players who are currently playing and who are waiting to play, can be solved. Accordingly, according to the present invention, the problem that when two players joining a game attempt to take the same position in a login table, one or both might be unable to join, can be solved.

Also, in a MANET of the present invention, there is provided embodying a global clock for allowing the actions of the players in a multiplayer game to be synchronized. Each device in a conventional MANET may have an internal clock, but the different clocks may run at slightly different speeds. However, in a MANET of the present invention, the problem of being able to lose the synchronization of the clocks while the game progressed, can be solved by embodying functions for such synchronizing.

Further, according to the present invention, in a MANET, there is provided a function for being able to deal with the loss of data packets exchanged by the devices in the MANET. In a traditional network, if a data packet transmitted by a device does not reach its destination, the central server can take appropriate measures to recover from the data loss. For instance, the server can instruct the transmitting device to resend the packet.. However, a MANET of the present invention, it can be determined when data loss occurs and what steps should be taken to recover from the data loss.

In addition, in the present invention, there is provided a function in a MANET for managing conflict avoidance and resolution. In the case of a multiplayer game, several types of conflicts might arise. For example, in a game in which the players are represented by icons that can move about on a display screen, two icons might attempt to occupy the same space on the screen. Such an overlapping of the icons might cause undesirable results in the action of the game. In a traditional network, the central server might prevent such conflicts from occurring or might resolve such conflicts after they occur. In the present invention a MANET has a function to solve the conflicts without server to deal with such conflicts.

Another type of conflict might occur in, for example, a shooting game in which multiple players attempt to shoot at objects on a screen. In such a game, two players might shoot the same object at about the same time. In a traditional network, the central server might determine which player gets credit for shooting the object. However, in a MANET of the present invention, there is a function to make the decision without central entity that could make such a decision.

According to the present invention, to solve the problems of the MANET as stated above, an infra structure of the MANET is need as set forth below.

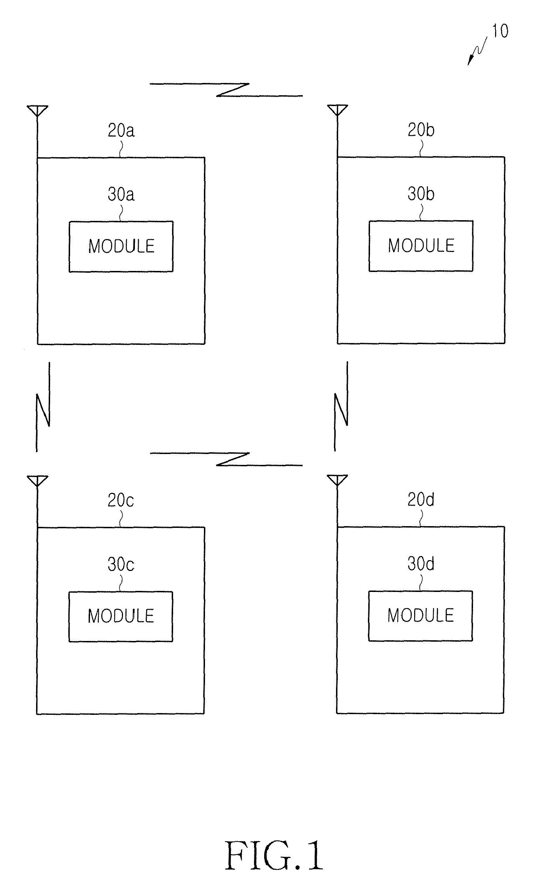

Figure 1 is a view illustrating an organization of the MANET. Figure 1 illustrates the MANET including devices 20a-20d such as wireless devices, which is the infra structure capable of overcoming these shortcomings of previous MANETs. Each device 20a-20d contains a module 30a-30d that can perform one or more functions among login, synchronization, data loss recovery, and conflict avoidance and resolution functions. The modules 30a-30d might be software, firmware, logic circuitry, or similar modules. Users of the devices 20a-20d that contain the modules 30a-30d might be able to play multiplayer games and perform other coordinated activities that traditionally required a central server.

In an embodiment, the devices 20a-20d communicate by forming a multicast group with one another. In IPv6, a multicast group is formed by using a header to specify that the associated data packet is a multicast packet. In IPv4. a range of addresses are dedicated to multicast transmissions. That is, each device 20a-20d uses an IP address in the range from 224.xxx.xxx.xxx to 239.xxx.xxx.xxx. Devices 20a-20d that use IP addresses in this range and that are near enough to each other to reliably send and receive information to and from each other wirelessly can be considered to be logged in to or a part of the MANET 10.

If a first user of a first device 20a wishes to join a multiplayer game, the first user sends a multicast transmission to all of the other devices 20b, 20c, 20d in the MANET 10 informing the other devices 20b, 20c, 20d of the first user's identity and the first user's desire to enter the game. The modules 30b, 30c, 30d in the other devices 20b, 20c, 20d maintain or have access to tables that keep track of all users currently in the game and wishing to enter the game. Upon receiving the first user's request to join the game, the modules 30b, 30c, 30d in the other devices 20b, 20c, 20d might add the first user to their tables of game players. The other devices 20b, 20c, 20d would then send the first device 20a information about their respective users and the first device 20a would add the information about the other users to a table maintained by the module 30a in the first device 20a. In this way, each device 20a-20d can maintain a table of information about the other players and, collectively, the tables in all of the devices 20a-20d in the MANET 10 can maintain information that is equivalent to the information contained in a centralized server in a traditional network.

A player attempting to log in to a multiplayer game might request a position in a player table that is already occupied by another player. To avoid such a conflict, the modules 30a-30d might follow a protocol for assigning players to different positions in the player tables. In an embodiment, the protocol might involve the first device 20a randomly choosing a number of a position in the player tables and sending a message to inform the other devices 20b, 20c, 20d of its intention to use the selected position.

The other devices 20b, 20c, 20d then determine whether the position corresponding to the selected number is in use in their tables. If the position is not in use, each of the other devices 20b, 20c, 20d sends the first device 20a a message stating that the position is available. If the first device 20a does not receive a message from any of the other devices 20b, 20c, 20d stating that the position is in use, the first device 20a uses the table position, updates its player table to reflect that it is using the table position, and sends a message to the other devices 20b, 20c, 20d stating that that table position is in use. The other devices 20b, 20c, 20d then update their player tables appropriately.

If, upon informing the other devices 20b, 20c, 20d of its intention to use a selected table position, the first device 20a receives a notification from one of the other devices 20b, 20c, 20d that the selected table position is in use, the first device 20a randomly selects another table position and again follows the procedure described above. This process continues until the first device 20a selects an unused table position.

If the first device 20a and a second device 20b both send messages stating their intentions to use the same table position, a protocol might be followed to determine whether the first device 20a or the second device 20b is assigned to the selected table position. In an embodiment, this protocol calls for the first device 20a and the second device 20b to randomly select wait times and then delay for the period of their random wait times. If, after delaying its wait time, the device 20a or the device 20b has not received a renouncement message, the device 20a or the device 20b sends a renouncement message and ceases its attempt to use the selected table position. The device 20a or the device 20b that received the renouncement message then uses the selected table position.

For example, if the device 20a selected a shorter wait time than the device 20b, the device 20a would delay its wait time, recognize that it has not received a renouncement message, renounce its attempt to use the table position that it had selected, and send a message stating that it has renounced. The device 20b, after delaying its wait time, would recognize the renouncement message from the device 20a, recognize that the table position that it had selected is available, use the selected table position, and send a message to the other devices 20b, 20c, 20d that it has taken the selected table position.

In many network-based games, creation of a new game entails the creation of a new table. In an embodiment, similar considerations to those discussed above for the selection of a position in a table could apply to creation of a new table. That is, a player wishing to start a new game might broadcast a number of a table for the game. If from the other devices 20b, 20c, 20d, there is no response that table number is in use, after the device 20a in the MANET 10 broadcasts a table number, , the player of the device (20a) could use the table number. If two players request to use the same table number, a renouncement procedure similar to that described above could be used to determine which player is allowed to use the table number.

When the devices 20a-20d are engaged in a multiplayer game or some other cooperative activity, the devices 20a-20d typically need to coordinate the sequences of occurrence for events that affect multiple devices 20a-20d. Each of the devices 20a-20d typically contains an internal clock to coordinate its internal activities, but the internal clocks in each device 20a-20d are not necessarily synchronized with one another. For example, each device 20a-20d might have the same time at the beginning of a game, but if some of the clocks are faster than others the clocks might lose their synchronization. This could lead to events occurring in an improper sequence. Since there is no central server in the MANET 10, there is no global clock within the MANET 10 to synchronize the events carried out by the devices 20a-20d.

Various techniques could be used to provide synchronization to the MANET 10. In one embodiment, each device 20a-20d is equipped with a global positioning system (GPS) receiver. The GPS receiver in each device 20a-20d could receive a timing signal from a GPS satellite and use this signal as a global clock for synchronizing the activities of the devices 20a-20d. In an alternative embodiment, each device 20a-20d periodically broadcasts the time indicated by its internal clock. The other devices 20a-20d receive these broadcasts and make the appropriate adjustments to take any differences in timing into account. Alternatively, the devices 20a-20d might adjust to one another by calculating and applying an adjustment function based on the differences in speed between the devices 20a-20d. The devices 20a-20d might take the round trip delay time of the broadcasts into account when adjusting to the times of the other devices 20a-20d.

Data packets transmitted within the MANET 10 could become lost in several different manners. For example, if the device 20a is outside the transmission range of the other devices 20b, 20c, 20d in the MANET 10, the device 20a might not receive a data packet. Also, one or more data packets that are transmitted simultaneously by different devices 20b, 20c, 20d might interfere with one another, causing one or more of the packets to fail to reach their destinations. Other causes of data loss will be familiar to one of skill in the art.

In a traditional network, a central server can take steps to compensate for data loss. In the MANET 10, where there is no central server, data loss might be managed in different manners depending on the circumstances of the data loss. In one example, a multiplayer game might involve the movement of one or more icons across the display screens of the devices 20a-20d. A series of data packets might describe the path that an icon is to take across the screens. If one of these packets is lost, the devices 20a-20d might not be able to determine the path that the icon should take.

In an embodiment, a procedure similar to the navigation technique known as dead reckoning might be used to estimate the path that such an icon would have taken if the data loss had not occurred. That is, an estimate of the icon's future path could be made by noting its previous path and speed and assuming that the icon will continue on the same path at the same rate. The icon can then be made to take this estimated path. The modules 30a-30d in the devices 20a-20d might be capable of making such an estimate in a consistent manner so that each device 20a-20d estimates the same path for the icon and causes the icon to take the same path on the screen of each device 20a-20d.

Various types of conflicts might occur in the MANET 10 when the devices 20a-20d are used for multiplayer games or other cooperative activities. In one example, two icons in a multiplayer game might try to occupy the same space in the display screen of a device 20a-20d at the same time. Such an overlapping of icons might lead to ambiguity in the action of the game and might need to be avoided.

In an embodiment, the modules 30a-30d in the devices 20a-20d can resolve such a conflict by changing one or both of the routes that were taken by the icons to arrive at the shared position. That is, the modules 30a-30d can keep track of the paths that the icons took to reach the shared position. At least one of the modules 30a-30d can then select a point on at least one of the previous paths and cause the icon that had taken that previous path to take a different path starting at the selected point. Alternatively, at least one of the modules 30a-30d might select a first point on at least one of the previous paths, randomly choose a second point near the first point but not on the previous path, and cause the icon to start at the second point and take a path substantially parallel to the previous path. In either case, at least one icon will follow a new path that does not lead to the shared position.

The recognition that an overlap has occurred, the calculation of a new path for at least one of the overlapping icons, and the movement along the new path can occur quickly enough that the players will not notice any delay or flickering in the movement of the icon that takes the previous path and then takes the new path. Also, the new path can be similar enough to the previous path that the player manipulating the icon that takes the new path will not notice that the icon did not take the path that the player intended.

Another type of conflict might occur, for example, in a shooting game in which multiple players attempt to shoot at targets that appear on the screens of the devices 20a-20d used by the players. If two players happen to hit the same target at the same time, a conflict would arise regarding which player should get credit for hitting the target. In an embodiment, when such a conflict occurs, the software modules 30a-30d in the devices 20a-20d used by each of the two players, for example software module 30a and software module 30b, can recognize that the two players have shot the same target at the same time. Software module 30a and software module 30b might then each select a random number and software module 30a might send its random number to software module 30b and software module 30b might send its random number to software module 30a. The software modules 30a and 30b might then input the random numbers into an algorithm that determines which player is given credit for hitting the target. For example, credit might be given to the player for whom the lower random number was chosen.

When conflicts occur, the software modules 30a-30d may require some time to resolve the conflicts. Loss of synchronization could occur in the MANET 10 if some software modules 30a-30d take actions while other software modules 30a-30d are resolving conflicts. For example, if software module 30a needed to resolve a conflict but, at the same time, software module 30b did not need to resolve a conflict, software module 30b might take an action before the conflict being addressed by software module 30a was resolved. If the actions taken by software module 30b and/or the outcomes of those actions have any dependence on the resolution of the conflict being addressed by software module 30a, undesirable results could occur.

In an embodiment, such undesirable outcomes can be prevented by causing each software module 30a-30d to wait a short delay time before taking any action. For example, each software module 30a-30d might take actions only at regularly spaced intervals. The delay time between each interval can allow other software modules 30a-30d to complete the resolution of any conflicts that they are addressing.

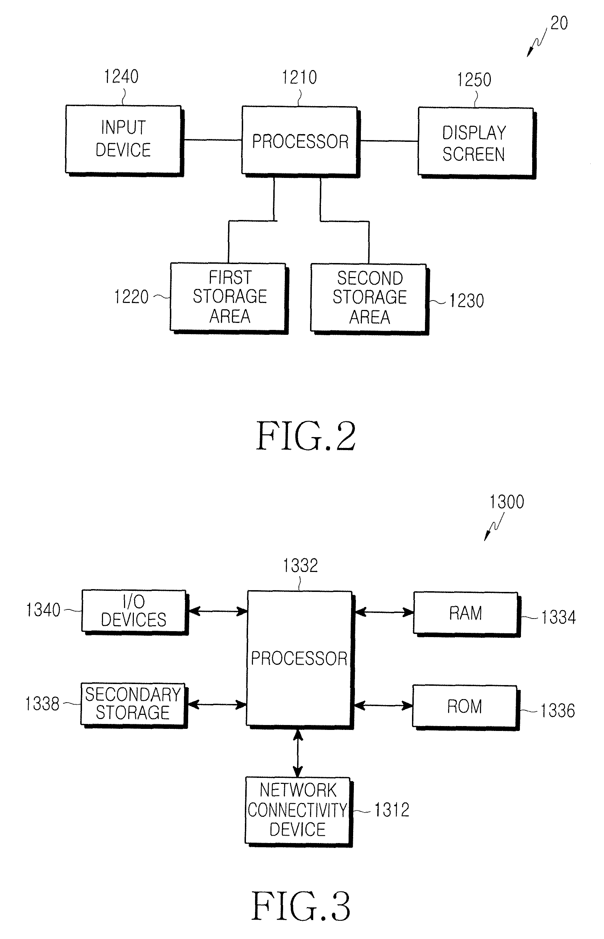

All or portions of the system described above may be implemented on any hand-held mobile electronic device 20 such as is well known to those skilled in the art. An exemplary device 20 for implementing one or more embodiments disclosed herein is illustrated in Figure 2. The device 20 includes a processor 1210 (which may be referred to as a central processor unit or CPU) that is coupled to a first storage area 1220, a second storage area 1230, an input device 1240 such as a keypad, and an output device such as a display screen 1250. As is well known to those skilled in the art, the device 20 may comprise a transmit/receive antenna (not shown) and radio frequency transmit/receive circuitry (not shown), some of which may be implemented by the processor 1210. In an embodiment, some of the transmit/receive antenna and radio frequency transmit/receive circuitry may be combined with some of the processor 1210 as a system-on-a-chip (SOC).

The processor 1210 may be implemented as one or more CPU chips and may execute instructions, codes, computer programs, or scripts that it accesses from the first storage area 1220 or the second storage area 1230. The processor 1210 may be implemented using one or more digital signal processors (DSPs), programmable logic devices (PLDs), field programmable gate arrays (FPGAs), application specific integrated circuits (ASICs), and/or other specialized semiconductor logic device. The first storage area 1220 might be a non-volatile memory such as flash memory. Device 20 data would typically be installed in the first storage area 1220. The second storage area 1230 might be firmware or a similar type of memory. The device's operating system would typically be installed in the second storage area 1230.

The devices described above may be implemented on any general-purpose computer with wireless communications capabilities and with sufficient processing power, memory resources, and network throughput capability to handle the necessary workload placed upon it. Figure 3 illustrates a typical, general-purpose computer system suitable for implementing one or more embodiments disclosed herein. The computer system 1300 includes a processor 1332 (which may be referred to as a central processor unit or CPU) that is in communication with memory devices including secondary storage 1338, read only memory (ROM) 1336, random access memory (RAM) 1334, input/output (I/O) devices 1340, and network connectivity devices 1312. The processor 1332 may be implemented as one or more CPU chips.

The secondary storage 1338 is typically comprised of one or more disk drives or tape drives and is used for non-volatile storage of data and as an over-flow data storage device if RAM 1334 is not large enough to hold all working data. Secondary storage 1338 may be used to store programs that are loaded into RAM 1334 when such programs are selected for execution. The ROM 1336 is used to store instructions and perhaps data that are read during program execution. ROM 1336 is a non-volatile memory device that typically has a small memory capacity relative to the larger memory capacity of secondary storage. The RAM 1334 is used to store volatile data and perhaps to store instructions. Access to both ROM 1336 and RAM 1334 is typically faster than to secondary storage 1338.

I/O devices 1340 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 1312 may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) and/or global system for mobile communications (GSM) radio transceiver cards, and other well-known network devices. These network connectivity devices 1312 may enable the processor 1332 to communicate with the Internet or one or more intranets. With such a network connection, it is contemplated that the processor 1332 might receive information from a network or might output information to a network in the course of performing the above-described method steps.

Such information, which may include data or instructions to be executed using processor 1332 for example, may be received from and outputted to the network, for example, in the form of a computer data baseband signal or signal embodied in a carrier wave. The baseband signal or signal embodied in the carrier wave generated by the network connectivity devices 1312 may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 1332 executes instructions, codes, computer programs, or scripts that it accesses from hard disk, floppy disk, optical disk (these various disk-based systems may all be considered secondary storage 1338), ROM 1336, RAM 1334, or the network connectivity devices 1312.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein, but may be modified within the scope of the appended claims. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as directly coupled or communicating with each other may be coupled through some interface or device, such that the items may no longer be considered directly coupled to each other but may still be indirectly coupled and in communication, whether electrically, mechanically, or otherwise with one another. Other examples of changes, substitutions, and alterations are ascertainable by one skilled in the art and could be made without departing from the scope of the present invention as defined by the appended claims.

## Claims

1. A system for providing collaboration among a plurality of devices in a mobile ad hoc network, comprising:
a module within each of the plurality of devices, the module operable to perform login, synchronization, data loss recovery, and conflict avoidance and resolution functions.

2. The system of claim 1, wherein the mobile ad hoc network is formed by the plurality of devices forming a multicast group.

3. The system of claim 2, wherein the plurality of devices forming the multicast group includes transmitting data to IP addresses and wherein the plurality of devices are in near enough proximity to one another that the plurality of devices can send and receive information to and from one another wirelessly.

4. The system of one of claims 1 to 3, wherein, when a first user of a first device wishes to participate in an activity with a second user of a second device among the plurality of devices, the first device sends information about the first user to the second device and the second device decides, based on the information about the first user, whether to allow the first user to participate in the activity.

5. The system of claim 4, wherein, when the second device decides to allow the first user to participate in the activity, the second device informs the first device of the allowance, the second device stores the information about the first user in a table maintained by the second device, the second device sends information about the second user to the first device, and the first device stores the information about the second user in a table maintained by the first device.

6. The system of claim 5, wherein the activity is a multiplayer game and wherein the first user requests to participate in the game with the second user by requesting access to a position in the table maintained by the second device.

7. The system of claim 6, wherein the second device determines whether the position requested by the first user has been given to another user, and, when the position requested by the first user has been given to another user, the first user requests another position in the table maintained by the second device, and, when the position requested by the first user has not been given to another user, the second device grants the position requested by the first user to the first user and the first device and the second device record that the position requested by the first user has been granted to the first user.

8. The system of claim 6, wherein, when the first device and a third device the plurality of devices substantially simultaneously request access to the position in the table maintained by the second device, the first device and the third device select random wait times and wait the selected wait times, and, when the shorter wait time among the selected wait times expires, the device with the shorter wait time renounces its request for access to the position in the table maintained by the second device, and, when the longer wait time among the selected wait times expires , the device with the longer wait time is granted access to the position in the table maintained by the second device.

9. The system of one of claims 1 to 8, wherein a plurality of actions taken by the plurality of devices are synchronized by a global positioning system.

10. The system of one of claims 1 to 8, wherein a plurality of actions taken by the plurality of devices are synchronized by each of the plurality of devices sending each of the others of the plurality of devices a plurality of times indicated by an internal clock within each of the plurality of devices and each of the others of the plurality of devices making an appropriate adjustment to compensate for a difference between at least two of the internal clocks.

11. The system of one of claims 1 to 8, wherein the plurality of devices participate in an activity in which at least one icon moves on a display screen on each of the plurality of devices and wherein an actual position of the at least one icon cannot be definitively ascertained due to a loss of information transmitted between the plurality of devices and wherein an estimated position of the at least one icon is determined from a previous path and speed of the at least one icon.

12. The system of one of claims 1 to 8, wherein the plurality of devices participate in an activity in which a plurality of icons move on a display screen on each of the plurality of devices and wherein, when at least two of the icons attempt to occupy a single position on the display screen, at least one of the at least two icons is placed on a path that is different from a path that led to the single position.

13. The system of claim 12, wherein the path that is different from the path that led to the single position is a path that begins at a previous point on the path that led to the single position and continues from the previous point in a direction different from the direction of the path that led to the single position.

14. The system of one of claims 1 to 13, wherein a plurality of users of the plurality of devices participate in an activity in which at least some of the plurality of users shoot toward at least one target on a display screen on each of the plurality of devices and wherein, when at least two users shoot a single target substantially simultaneously, the devices used by the at least two users each execute an algorithm to determine which of the at least two users is given credit for shooting the target.

15. The system of one of claims 1 to 14, wherein the plurality of devices wait a delay time before performing an action to allow at least one of the plurality of devices sufficient time to resolve a conflict.

16. A method for providing collaboration among a plurality of devices in a mobile ad hoc network, comprising:
a module within each of the plurality of devices performing login, synchronization, data loss recovery, and conflict avoidance and resolution functions.

17. The method of claim 16, further comprising forming the mobile ad hoc network by the plurality of devices forming a multicast group.

18. The method of claim 17, further comprising the plurality of devices that form the multicast group transmitting data to IP addresses, wherein the plurality of devices are in near enough proximity to one another that the plurality of devices can send and receive information to and from one another wirelessly.

19. The method of laim 18, further comprising, when a first user of a first device among the plurality of devices wishes to participate in an activity with a second user of a second device, the first device sending information about the first user to the second device and the second device deciding, based on the information about the first user, whether to allow the first user to participate in the activity.

20. The method of claim 19, further comprising, when the second device decides to allow the first user to participate in the activity, the second device informing the first device of the allowance, the second device storing the information about the first user in a table maintained by the second device, the second device sending information about the second user to the first device, and the first device storing the information about the second user in a table maintained by the first device.

21. The method of claim 20, wherein the activity is a multiplayer game and further comprising the first user requesting to participate in the game with the second user by requesting access to a position in the table maintained by the second device.

22. The method of claim 21, further comprising the second device determining whether the position requested by the first user has been given to another user, and, when the position requested by the first user has been given to another user, the first user requesting another position in the table maintained by the second device, and, when the position requested by the first user has not been given to another user, the second device granting the position requested by the first user to the first user and the first device and the second device recording that the position requested by the first user has been granted to the first user.
